# EUROPÄISCHE PATENTANMELDUNG

(11) **EP 1 690 582 A1**
(43) Veröffentlichungstag der Anmeldung: **16.08.2006**
(21) Anmeldenummer: 06101424.7
(22) Anmeldetag: 08.02.2006
(51) Int. Cl.: B01D 35/31, B01D 35/30, B01D 29/54

(54) **Filtersystem**

(30) Priorität: 15.02.2005 DE 102005007019
(71) Anmelder: MANN+HUMMEL GmbH, 71638 Ludwigsburg (DE)
(72) Erfinder: Dworatzek, Klemens, 68535 Edingen (DE); Münkel, Karlheinz, 75038 Oberderdingen-Flehingen (DE); Nguyen, Duc Cuong, 30880 Laatzen (DE); Bauder, Ralf, 68775 Ketsch (DE)

(57) **Zusammenfassung**

Die Erfindung betrifft ein Filtersystem für ein Fluid, insbesondere Flüssigkeitsfilter, vorzugsweise Ölfilter für eine Brennkraftmaschine, aufweisend ein becherförmiges Gehäuse (11), ein wechselbar darin angeordnetes Filterelement (19,21) und einen Aufnahmekopf (12), wobei das becherförmige Gehäuse (11) lösbar mit dem Aufnahmekopf (12) verbindbar ist, wobei das Filterelement (19,21) eine flüssigkeitsdichte Ummantelung (16) aufweist, welche im Inneren des becherförmigen Gehäuses angeordnet ist.

## Beschreibung

### Stand der Technik

Die Erfindung betrifft einen Fluidfilter nach dem Oberbegriff des Patentanspruchs 1.

Bekannte Fluidfilter, insbesondere Ölfilter für eine Brennkraftmaschine sind im Stand der Technik in zwei verschiedenen Varianten bekannt. Einerseits werden sogenannte Spin-On-Filter eingesetzt, wobei der Spin-On-Filter aus einem becherförmigen Gehäuse, einem darin unlösbar angeordneten Filterelement und einer Abschlussplatte, welche ein Gewinde aufnimmt aufgebaut ist. Das becherförmige Gehäuse ist hierbei aus einem Metall, um die im Betrieb der Brennkraftmaschine auftretenden Druckpulsation im Inneren des Filters aufnehmen zu können. Der Spin-On-Filter wird auf einen Aufnahmeflansch, oder direkt an den Motorblock der Brennkraftmaschine angeschraubt und im Wartungsfall komplett durch einen neuen Spin-On-Filter ersetzt. Dieses beinhaltet allerdings Nachteile, welche sich aus dem Materialmix des Filters ergeben, da hier eine Mischung aus Kunststoffen, Papier und Metall entsorgt werden müssen, wobei die Entsorgung im Sinne einer Materialtrennung problematisch ist.

Weiterhin sind sogenannte Ölmodule im Stand der Technik bekannt, bei denen ein Filterelement lösbar in einem bevorzugt becherförmigen Gehäuse angeordnet und mit Hilfe dieses Gehäuses wiederum an einen Aufnahmekopf, welcher sich im Kreislauf befindet angeschraubt werden. Im Wartungsfall ist hier nur die metallfreie Filterpatrone zu ersetzen und das becherförmige Gehäuse ist als Lebensdauerbauteil ausgeführt.

Die DE 200 04 31 U1 zeigt einen Flüssigkeitsfilter mit Umgehungsventil. Hierbei ist ein hohlzylindrisches Filterelement innerhalb eines becherförmigen Gehäuses lösbar angeordnet, wobei das becherförmige Gehäuse in einem Anschlusskopf eingeschraubt wird. Konzentrisch im Inneren des Filterelementes ist ein Stützrohr angeordnet, welches ein Umgehungsventil aufnimmt.

Als nachteilig erweist sich hier der Wechsel des Filterelementes, bei dem einerseits die Gefahr der Verschmutzung der direkten Umgebung des Ölfilterelementes besteht, da das ölgetränkte Filtermedium beim Wechsel noch Restöl beinhaltet und dieses abtropfen kann und andererseits den Nachteil der Verschmutzung der Hände des Bedienpersonals, da diese direkt mit dem ölgetränkten Filterelement in Kontakt kommen.

Aufgabe der Erfindung ist es daher die oben genannten Nachteile zu vermeiden und ein Filterelement zu entwickeln, welches einfach und sauber in der Anwendung ist, und einen Schutz gegen Druckpulsationen bietet.

Diese Aufgabe wird durch die Merkmale des Patentanspruchs 1 gelöst.

### Vorteile der Erfindung

Das erfindungsgemäße Filtersystem für ein Fluid, insbesondere Flüssigkeitsfilter vorzugsweise Ölfilter für eine Brennkraftmaschine, weist ein becherförmiges Gehäuse, ein wechselbar, darin angeordnetes Filterelement und einen Aufnahmekopf auf, wobei das becherförmige Gehäuse lösbar mit dem Aufnahmekopf verbindbar ist. Weiterhin weist das Filterelement innerhalb des becherförmigen Gehäuses zusätzlich eine flüssigkeitsdichte Ummantelung auf. Die flüssigkeitsdichte Ummantelung besteht dabei vorzugsweise aus einem Kunststoffmaterial, wobei dieses blasgeformt oder spritzgegossen sein kann. Die äußere Form ähnelt der Innenform des becherförmigen Gehäuses, also wird auch hier eine becherförmge Form bevorzugt. Diese kann dabei im becherförmigen Gehäuse voll umfassend anliegen oder nur an einigen wenigen Punkten anliegen oder sogar ohne Kontakt zum becherförmigen Gehäuse ausgestaltet sein, der Abstand zwischen der Innenwand des becherförmigen Gehäuses und der Aussenwand der flüssigkeitsdichten Ummantelung sollte jedoch möglichst gering sein. Dadurch ergibt sich in positiver Weise, dass bei einem Wechsel des Filterelementes die im Filterelement vorhandene Flüssigkeit nicht austreten kann und somit eine Verschmutzung der Umgebung verhindert wird. Weiterhin wird auch eine Verschmutzung der Hände des bedienenden Personals vermieden, da die Aussenhülle der flüssigkeitsdichten Ummantelung trocken und sauber ist. Als weiterer Vorteil gegenüber dem konventionellen Ölmodulen ergibt sich, dass eine Verschmutzung der Innenwandung des becherförmigen Gehäuses ebenso vermieden wird, da die Innenwandung des becherförmigen Gehäuses nicht mit dem zirkulierenden Öl in Kontakt kommt.

Gemäß einer vorteilhaften Ausgestaltung der Erfindung kann das becherförmige Gehäuse betriebsbedingt Durchmesserschwankungen der flüssigkeitsdichten Ummantelung aufnehmen und ihnen entgegenwirken. Diese betriebsbedingten Durchmesserschwankungen können zum Beispiel Durchmesservergrößerung durch die Temperaturschwankung oder auch durch eine Abstimmung der flüssigkeitsdichten Ummantelung auf das becherförmige Gehäuse ist es möglich die flüssigkeitsdichte Ummantelung mit einer dünnen Wandstärke und einem günstigen Kunststoff herzustellen, wodurch die Fertigung des Filterelementes kostengünstiger wird und dennoch die gewünschten Funktionen erfüllt werden können. Das becherförmige Gehäuse dahingegen kann dann etwas stabiler aus einem Metall oder einem Kunststoff hergestellt werden, so dass dieses die Durchmesservergrößerung der flüssigkeitsdichten Ummantelung aufnehmen kann. Dabei stützt sich die flüssigkeitsdichte Ummantelung an dem stabilen becherförmigen Gehäuse ab, wobei dieses als Lebensdauerbauteil eine größere Wandstärke als die flüssigkeitsdichte Ummantelung aufweisen kann.

Es ist vorteilhaft, wenn das Filterelement wenigstens einen hohlzylindrischen Filterbalg aufweist, welcher einen Flüssigkeitseinlass dichtend von einem Flüssigkeitsauslass trennt. Die flüssigkeitsdichte Ummantelung, weist hierzu Mittel zur Abstützung einer radialen Aussenkontur des Filterbalges auf. Der Filterbalg kann dabei aus einem zick-zack-förmig gefalteten oder einem gewickelten Filtermedium aufgebaut sein, wobei das Filtermedium ein Filterpapier oder ein synthetisches Flies sein kann. Infolge der Druckpulsation im Betrieb besteht unter bestimmten Umständen die Gefahr, dass der Filterbalg kollabiert. Um dem entgegenzuwirken, weisen viele hohlzylindrische Filterelemente in ihrem inneren Durchmesser einen Stützkörper auf, wobei jedoch immer noch die Gefahr eines Kollabierens nach aussen besteht. Durch diese Ausgestaltung kann eine radiale Ausdehnung des Filterbalges durch Druckpulsationen über die Mittel zur Abstützung innerhalb der flüssigkeitsdichten Ummantelung aufgefangen werden. In Kombination mit der Aufnahme der Durchmesserschwankungen der flüssigkeitsdichten Ummantelung durch das becherförmige Gehäuse, können hier die auftretenden Kräfte direkt über die flüssigkeitsdichte Ummantelung an das becherförmige Gehäuse weitergeleitet werden. Also ergibt sich hier eine Kombination aus großer Wartungsfreundlichkeit durch die saubere Möglichkeit des Service des Filterelementes und der Einbindung der Funktion eines äußeren Stützkörpers für den Filterbalg sowie einer kostengünstigen Ausführung der flüssigkeitsdichten Ummantelung da bestimmte stabilitätsbeeinflussende Funktionen über das becherförmige Gehäuse aufgenommen werden können.

Es ist vorteilhaft, wenn die Mittel zur Abstützung durch über den Umfang verteilte Stützkonturen bei der flüssigkeitsdichten Ummantelung ausgeführt werden. Dabei stützen die Stützkonturen einerseits die Aussenkontur des Filterbalges gegen radial nach aussen wirkende Kräfte und leiten andererseits die aufgenommenen Kräfte an das becherförmige Gehäuse weiter.

Gemäß einer Ausgestaltung der Erfindung bilden die Stützkonturen Abschlussvolumina zwischen Filterbalg und Innenseite der flüssigkeitsdichten Ummantelung, wobei die Abschlussvolumina mit dem Boden der flüssigkeitsdichten Ummantelung korrespondieren. Dies bedeutet, dass durch den Filterbalg gereinigte Flüssigkeit durch die Abschlussvolumina zum Boden der flüssigkeitsdichten Ummantelung fließen können. Zusätzlich zu den oben genannten Vorteilen wie erhöhte Wartungsfreundlichkeit und Funktion eines Aussenstützkörpers entsteht hier ein dritter Vorteil, nämlich die Möglichkeit über die Stützkörper eine Flüssigkeit aufzunehmen und weiterzuleiten.

Gemäß einer weiteren vorteilhaften Ausgestaltung der Erfindung weist die flüssigkeitsdichte Ummantelung im Bereich einer der Stirnseiten wenigstens eine radial nach aussen über den umfangsseitigen Durchmesser hinausgehende Wirkkontur auf. Mittels dieser Wirkkontur ist beispielsweise die genaue radiale und axiale Zuordnung zum becherförmigen Gehäuse möglich. Desweiteren bietet die Wirkkontur die Möglichkeit der Überprüfung ob ein Filterelement eingesetzt ist und ob dieses für das Filtersystem geeignet ist.

In vorteilhafter Weise ist die Wirkkontur korrespondierend zu einer Aussparung des becherförmigen Gehäuses ausgelegt. Da ausserhalb des Filterelementes ja keine Flüssigkeit vorhanden ist, ist es so einfach möglich, ohne eine spezielle Dichtung vorsehen zu müssen das Filterelement in das becherförmige Gehäuse einzusetzen und axial sowie radial festzulegen.

Eine zweckmäßige Ausführung des Erfindungsgedankens, beinhaltet, dass im Bereich des Flüssigkeitseinlasses und -auslasses eine einstückige Rücklaufsperrmembran angeordnet ist. Diese einstückige Rücklaufsperrmembran übernimmt dabei die Funktion einer normalen Rücklaufsperrmembran im Einlassbereich und zusätzlich die Funktion eines Rücklaufsperrventils im Auslassbereich. Im Betrieb der Brennkraftmaschine bei eingesetztem Filterelement sind Ein- und Auslass geöffnet, jedoch bei ausgebautem Filterelement wird durch die einstückige Rücklaufsperrmembran ein Ausfließen des Inhalts des Filterelementes durch den Ein- und/oder Auslass verhindert. Auch hier ergibt sich wieder ein großer Vorteil im Wartungsfall, so dass das Filterelement aus dem becherförmigen Gehäuse herausgenommen werden kann und auch unter einem Winkel zur Horizontalen in die Entsorgung gegeben werden kann, ohne dass der noch im Filterelement vorhandene Inhalt hinausfließen kann.

Gemäß einer weiteren Ausgestaltung der Erfindung sind im Inneren der flüssigkeitsdichten Ummantelung zwei hohlzylindrische Filterbalge konzentrisch angeordnet. Dabei weisen die Filterbalge auf der einen Stirnseite eine gemeinsame Endscheibe auf und auf der anderen Stirnseite jeweils eine eigene Endscheibe. Die Endscheibe ist dabei bevorzugt aus einem thermoplastischen Kunststoff hergestellt und die Filterbalge werden mit der Endscheibe über ein Kleb- oder Schweißverfahren verbunden. Die gemeinsame Endscheibe ist dabei bevorzugt kreisringförmig aufgebaut, so dass konzentrisch im Inneren des inneren Filterbalges eine Durchflussöffnung für die gereinigte Flüssigkeit entsteht. Durch die getrennte Ausführung der beiden stirnseitigen Endscheiben auf der gegenüberliegenden Stirnseite der beiden Filterbalge ist es hier möglich, verschiedene axiale Längen der Filterbalge zu realisieren.

Es ist vorteilhaft, wenn die gemeinsame Endscheibe auf der den Filterbälgen gegenüberliegenden Seite ein Federmittel zur Abstützung an der Innenseite des Bodens der flüssigkeitsdichten Ummantelung aufweist. Hierdurch ist es möglich die Filterbälge gegenüber der flüssigkeitsdichten Ummantelung axial abzustützen und festzulegen.

Gemäß einer weiteren vorteilhaften Ausgestaltung der Erfindung bildet die einzelne Endscheibe des äußeren Filterbalges gleichzeitig einen dichten Abschluss der flüssigkeitsdichten Ummantelung, wobei der radial äußere Rand der Endscheibe unlösbar dicht mit der Flüssigkeitsdichten Ummantelung verbunden ist. Diese Verbindung kann beispielsweise über ein Schweiß-, Kleb-, oder sonstiges im Stand der Technik bekanntes Verfahren zur unlösbaren Verbindung zweier Kunststoffteile miteinander erfolgen.

Weiterhin kann in vorteilhafter Weise die einzelne Endscheibe ein sich axial vom Filterelement weg erstreckenden Ringkragen aufweisen, wobei im Ringkragen ein Dichtmittel zur Abdichtung des Filterelementes gegenüber dem Anschlusskopf angeordnet ist. Dieses Dichtmittel kann beispielsweise ein O-ring oder ein Dichtring sein, welcher in einer Nut im Aussenumfang oder im Innenumfang des Ringkragens angeordnet ist. Somit bildet die Endscheibe des äußeren Filterbalges einerseits eine Sicherung des Filtermediums und andererseits einen Abschluss des Filterelementes inklusive Anschlussmöglichkeit an einen Anschlusskopf. Die Reinigung der Flüssigkeit erfolgt dabei wie folgt: die ungereinigte Flüssigkeit strömt über wenigstens einen Einlass in einen Zwischenraum zwischen den beiden Filterbalgen, durchdringt dann die beiden Filterbalge einmal radial nach Innen und einmal radial nach Aussen, wobei hier die Filtrierung der Flüssigkeit erfolgt. Der gereinigte Teil des Flüssigkeitsstromes der nach Innen in das Innere des inneren Filterbalges geströmt ist strömt von dort über den Auslass wieder zurück in den Flüssigkeitskreislauf. Der gereinigte Teil der Flüssigkeit welcher radial nach Aussen in den äusseren Filterbalg geströmt ist, wird durch die Wirkkonturen der flüssigkeitsdichten Ummantelung zum Boden der flüssigkeitsdichten Ummantelung weitergeleitet von wo er dann durch die Öffnung in der einzelnen Endscheibe in das Innere des inneren Filterbalges gelangt und von dort aus auch über den Auslass wieder zurück in das Flüssigkeitssystem überführt wird.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnungen

Weitere Einzelheiten der Erfindung werden in den Zeichnungen anhand von schematischen Ausführungsbeispielen beschrieben.

Hierbei zeigt
- Figur 1: eine Schnittdarstellung des Flüssigkeitssystems,
- Figur 2: einen Schnitt von Filterelement und becherförmigem Gehäuse,
- Figur 3: eine isometrische Ansicht von Filterelement und becherförmigem Gehäuse,
- Figur 4: eine einzelisometrische Ansicht des becherförmigen Gehäuses,
- Figur 5: einen Schnitt durch die Außenhülle des Filterelementes,
- Figur 6: eine isometrische Ansicht der Rücklaufsperrmembran,
- Figur 7: zeigt eine Draufsicht auf einen Schnitt im Bereich des Blockiermittels,
- Figur 8: zeigt einen Schnitt durch eine alternative Rücklaufsperrmembran und
- Figur 9: einen Schnitt durch einen Teil eines alternativen Filterelementes.

### Ausführungsformen der Erfindung

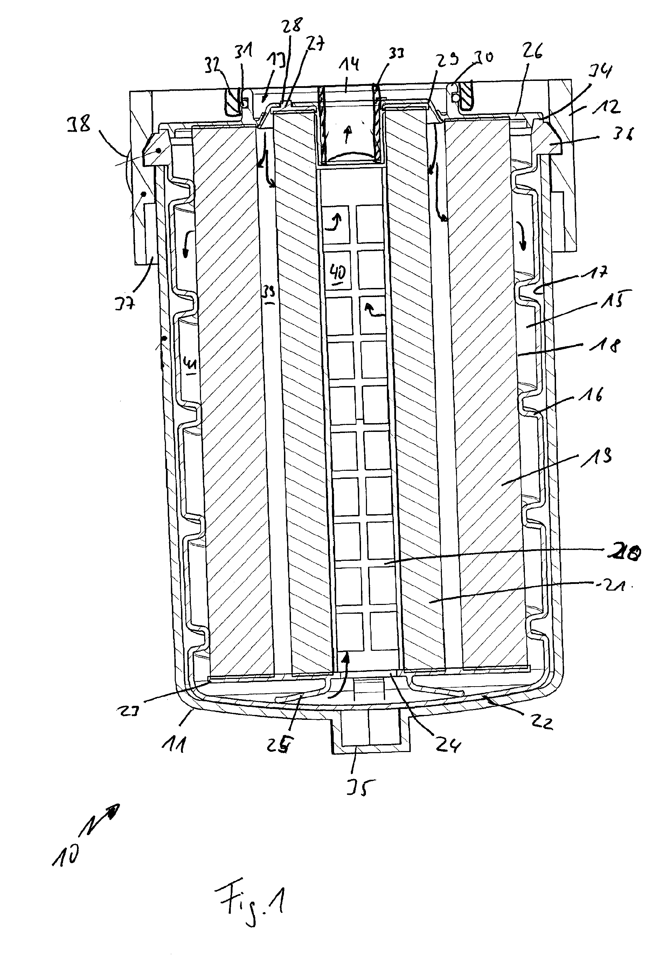

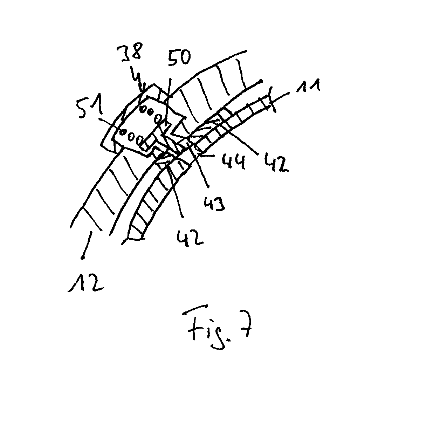

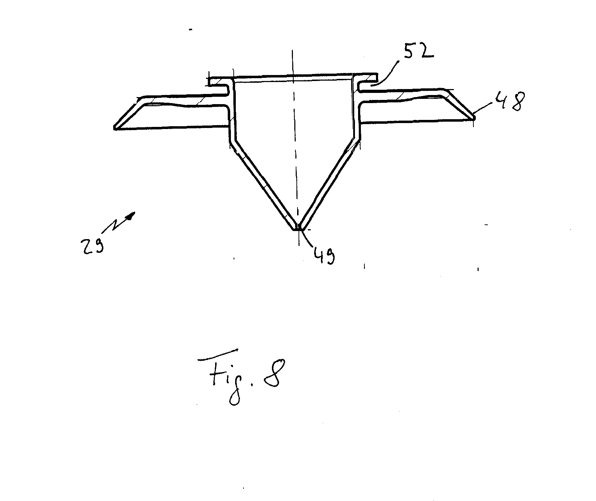

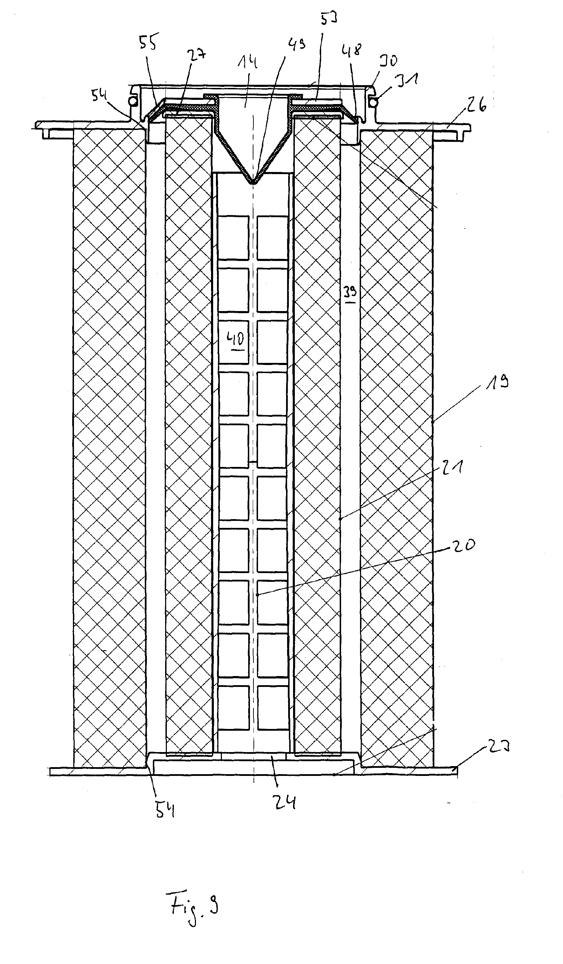

Die Figur 1 zeigt die Schnittdarstellung eines Flüssigkeitsfiltersystems 10, wobei ein becherförmiges Gehäuse 11 mittels einer Bajonettverbindung mit einem Anschlusskopf 12 verbunden ist. Der Anschlusskopf kann hierbei ein separater Anschlussflansch sein, oder auch direkt aus einer Komponente einer Brennkraftmaschine gebildet sein. Das Filtersystem kann verwendet werden für Flüssigkeiten jedweder Art einer Brennkraftmaschine, wie beispielsweise Öle, Kraftstoffe, Hydraulikflüssigkeiten oder auch Kühlmittel. Im Anschlusskopf 12 des Filtersystems 10 sind ein Einlass 13 und eine Auslass 14 angeordnet. Der Auslass 14 ist dabei konzentrisch im Zentrum der Verbindung zwischen becherförmigem Gehäuse 11 und Anschlusskopf 12 angeordnet und der Einlass 13 ist dabei konzentrisch um den Auslass 14 verteilt, ebenfalls im Inneren der Verbindung zwischen becherförmigem Gehäuse 11 und Anschlusskopf 12 angeordnet. Im becherförmigen Gehäuse 11 ist ein Filterelement 15 angeordnet. Das Filterelement 15 weist hierbei einen Kanister 16 auf, welcher das oder die Filtermedien aufnimmt. Der Kanister 16 stützt sich umfangsseitig radial nach aussen an einer Innenwandung 17 des becherförmigen Gehäuses 11 ab, und stützt gleichzeitig durch im Kanister 16 angeordnete Nuten eine Aussenwandung 18 eines ersten Filterbalges 19 ab. Der Kanister 16 ist flüssigkeitsdicht ausgeführt, und beherbergt zusätzlich die Funktion eines äußeren Stützrohres für einen ersten Filterbalg und einer Abstützung gegen Druckpulsationen am becherförmigen Gehäuse 11. Dadurch kann der Kanister 16 in seiner Materialstärke relativ gering ausgelegt werden, da die eigentliche Abstützung je Druckpulsation am becherförmigen Gehäuse 11 erfolgt. Im Inneren des Filterelementes ist konzentrisch ein Stützrohr 20 angeordnet, um welches sich ein zweiter Filterbalg 21 herum erstreckt. Der erste und der zweite Filterbalg können dabei durch ein zick-zack-förmig gefaltetes Filtermedium, durch ein gewickeltes Filtermedium, einer Kombination daraus oder sonstigem Stand der Technik bekannten Filterbalgen gebildet sein. Im Bereich eines Gehäusebodens 22 des Kanisters 16 werden die beiden Filterbalge durch eine Endscheibe 23, welche kreisringförmig mit einer konzentrisch angeordneten Öffnung 24 ausgeführt ist, gehalten. Einstückig aus der Endscheibe 23 heraus geformt ist ein Federelement 25, welches die Filterbalge am Gehäuseboden 22 abstützt und durch Aufbringung einer axial nach oben wirkenden Federkraft axial festlegt und fixiert. Die radiale Festlegung und Fixierung erfolgt durch die Innenkontur des Kanisters 16. Am gegenüberliegenden Ende der Filterbalge weist der erste Filterbalg 19 einen Endscheibenabschluss 26 auf. Der zweite Filterbalg 21, welcher im Inneren des ersten Filterbalgs 19 angeordnet ist, weist eine geringfügig höhere axiale Erstreckung als der erste Filterbalg 19 auf, und der stirnseitige Abschluss des zweiten Filterbalgs 21 erfolgt über eine Endscheibe 27, welche kreisringförmig geformt ist und konzentrisch einen Durchlass für den Auslass 14 darstellt. Axial in Richtung des Anschlusskopfes 12 hinausragend, weist die Endscheibe 27 eine Einknüpfkontur 28 für eine Rücklaufsperrmembran 29 auf. Die Einknüpfkontur 28 ist dabei über die Endscheibe 27 verteilt und weist mehrere axial in Richtung des Anschlusskopfes 12 herausstehende Stifte oder pilzförmige Konturen auf. Die Rücklaufsperrmembran 29 wird dabei dicht auf die Endscheibe 27 mittels der Einknüpfkontur 28 aufgeknüpft und dichtet bei stehender Brennkraftmaschine einerseits den Flüssigkeitseinlass 13 ab sowie im Wartungsfall den Flüssigkeitsauslass 14. Bevorzugt ist die Rücklaufsperrmembran 29 dabei aus einem weichen thermoplastischen Kunststoff aufgebaut wie beispielsweise ein thermoplastisches Elastomer (TPE). Die Endscheibe 26 weist konzentrisch einen axial herausstehenden Ringkragen 30 auf, wobei im äußeren Umfang eine Nut zur Aufnahme eines Dichtrings 31 angeordnet ist. Der Ringkragen 30 wird beim Verbinden vom becherförmigen Gehäuse 11 und Anschlusskopf 12 in eine Kragenaufnahme 32 des Anschlusskopfes eingeführt, wobei der Dichtring 31 dort zu einer Abdichtung zwischen Ringkragen 30 und Kragenaufnahme 32 dient. Konzentrisch im Inneren der Kragenaufnahme 32 ist ein Auslassrohr 33 angeordnet, welches in die Öffnung der Endscheibe 27 eintaucht und dabei die auslassseitige Rücklaufsperre der Rücklaufsperrmembran 29 öffnet. Zur Abdichtung zwischen Roh- und Reinseite erfolgt die Dichtung hierbei radial zwischen Rücklaufsperrmembran 29 und Auslassrohr 33, welches im Anschlusskopf 12 angeordnet ist. Zur flüssigkeitsdichten Abdichtung des Filterelements 15 sind der Kanister 16 und die Endscheibe 26 über eine Verbindungskontur 34 beispielsweise durch ein Schweiß- oder Klebverfahren unlösbar dichtend miteinander verbunden. Das becherförmige Gehäuse 11 weist zum Lösen im Wartungsfall und zum Verbinden eine Werkzeugaufnahme 35 auf, welche beispielsweise einen Innen- oder Aussensechskant aufweisen kann. Dort wird im Wartungsfall ein Werkzeug angesetzt um das becherförmige Gehäuse 11 vom Anschlusskopf 12 zu trennen oder beide Teile wiederum zu verbinden. Aus dem einen axialen Ende des Kanisters 16 der den über den Umfang verteilt mehrere Teile 36 von Rastelementen in Form einer radial nach aussen stehenden Nase ausgebildet. Diese greifen in Aussparungen des becherförmigen Gehäuses sowie Aussparungen innerhalb einer Rastkontur des becherförmigen Gehäuses 11 welche in den folgenden Figuren gezeigt werden ein. Gleichzeitig dient der Teil 36 der Rastelemente des Kanisters 16 auch als Verbindungskontur 34 zur Endscheibe 26. Der Anschlusskopf 12 weist Führungen 37 auf, in welche Rastkonturen gebildet aus dem Teil 36 der Rastelemente des Kanisters 16 und aus dem becherförmigen Gehäuses 11 eingeschoben und geführt werden können. Im äußeren Berech des Anschlusskopfes 12 ist wenigstens ein Blockiermittel 38 angeordnet, welches eine Verbindung zwischen becherförmigem Gehäuse und Anschlusskopf 12 verhindert, wenn kein Filterelement 15 oder ein falsches Filterelement eingesetzt ist. Dabei greift dann das Blockiermittel 38 in eine Aussparung 44 des becherförmigen Gehäuses 11 ein und verhindert so ein Schließen des Bajonettverschlusses. Die Funktion des Blockiermittels 38 ist in der Figur 7 dargestellt.

Die zu reinigende Flüssigkeit fließt durch den Einlass 13 des Anschlusskopfes 12 in einen Zwischenraum 39 zwischen den beiden Filterbalgen 19, 21, durchströmt den inneren zweiten Filterbalg 21 in einem reinseitigen Abflussraum 40 innerhalb des Stützrohrs 20 um dann durch die durch das Auslassrohr 33 geöffnete Rücklaufsperrmembran 29 durch den reinseitigen Auslass 14 zurück in das System zu strömen. Ein weiterer Teil der noch nicht gereinigten Flüssigkeit durchströmt ausgehend vom Zwischenraum 39 den äusseren ersten Filterbalg 19 radial nach aussen in ein kanisterseitiges Volumen, in dem es nach unten bis zum Gehäuseboden 22 strömt und von dort aus auch durch den reinseitigen Auslass 14 in das System zurückgeführt werden kann.

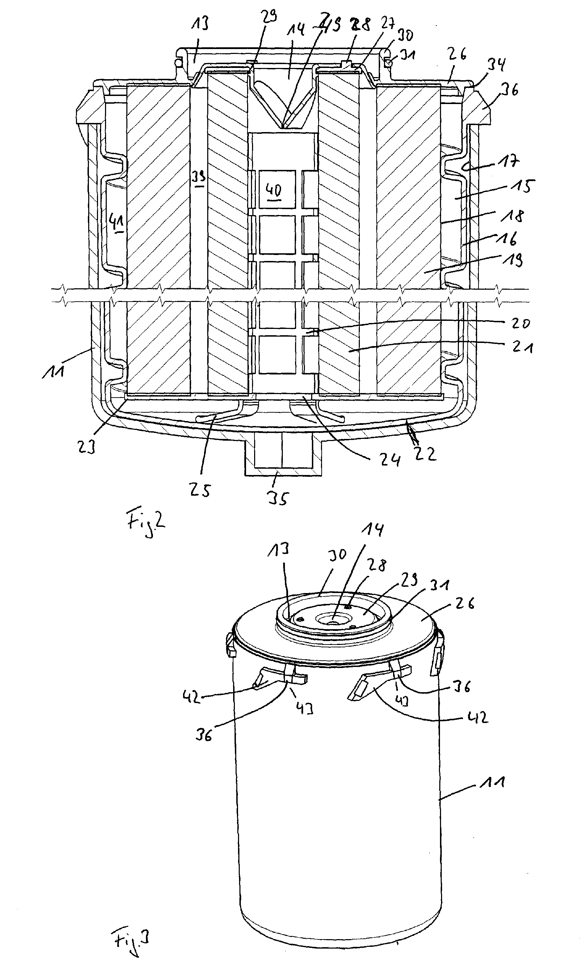

In Figur 2 ist die Kombination aus Filterelement 15 und becherförmigem Gehäuse 11 im Schnitt dargestellt. Der vorherigen Figur entsprechende Bauteile sind mit den gleichen Bezugszeichen versehen. Hier ist zu erkennen, dass bei vom Anschlusskopf 12 gelösten becherförmigen Gehäuse 11 inklusive Filterelement 15 die Rücklaufsperrmembran 29 im Bereich des reinseitigen Auslasses 14 durch das nicht mehr vorhandene Auslassrohr 33 in die Ursprungsform zurückgekehrt ist und ein Ausfließen der im Filterelement 15 gespeicherten Flüssigkeit verhindert. Durch die Ausführung der Rücklaufsperrmembran 29 als thermoplastisches Elastomer kann durch die Kontur eine Rückstellkraft innerhalb der Sperrmembran hervorgerufen werden, welche sich in einer auslassseitigen Dichtung, welche allein durch die Rückstellkraft dicht geschlossen ist, äußert.

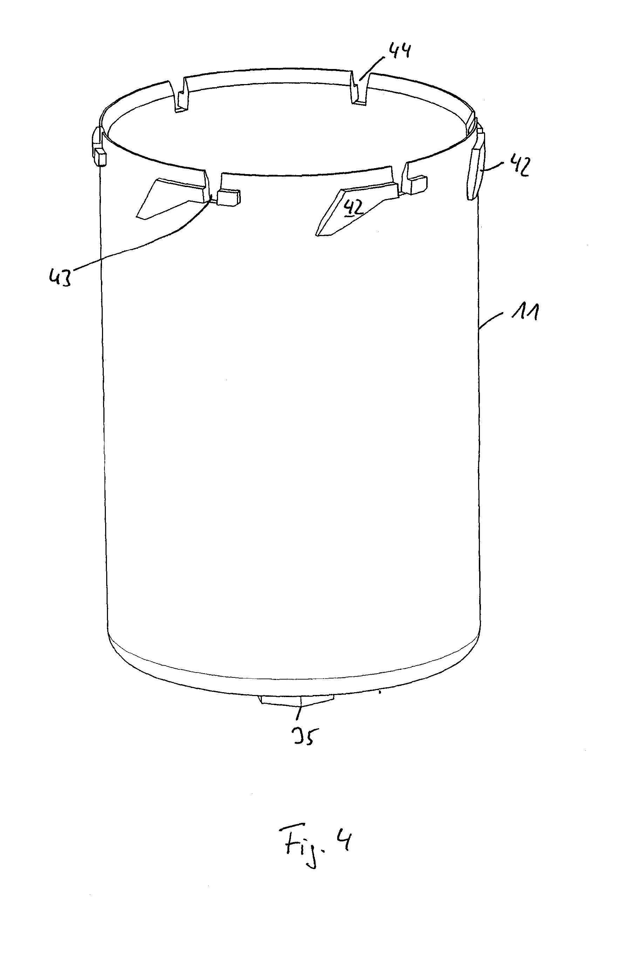

Die Figur 3 zeigt eine isometrische Ansicht von becherförmigem Gehäuse 11 und darin angeordneten Filterelement 15. Den vorherigen Figuren entsprechende Bauteile sind mit en gleichen Bezugszeichen versehen. Hier sind deutlich die mehreren Einknüpfkonturen 28 der Endscheibe 27 für die Rücklaufsperrmembran 29 zu erkennen. Desweiteren am offenen axialen Ende des becherförmigen Gehäuses 11 umfangsseitig mehrere Rastkonturen 42 für die Herstellung des Bajonettverschlusses innerhalb des Filtersystems 10 gleichmäßig verteilt angeordnet. In einer Aussparung 43 der Rastkontur 42 ist der filterelementsseitige Teil 36 des Rastelementes bei korrekt installiertem Filterelement 15 angeordnet, wodurch sich eine Komplettierung der Rastkontur 42 ergibt. Bei nicht eingesetztem Filterelement 15 oder einem nicht hierzu passenden Filterelement bleibt die Aussparung 43 innerhalb der Rastkontur 42 frei, wodurch ein bajonettförmiges Verbinden zwischen becherförmigem Gehäuse 11 und Anschlusskopf 12 durch das Blockiermittel 38 verhindert wird. Das Blockiermittel 38 greift dann in die Aussparung 43 ein und verhindert ein Verdrehen des becherförmigen Gehäuses 11 relativ zum Anschlusskopf 12.

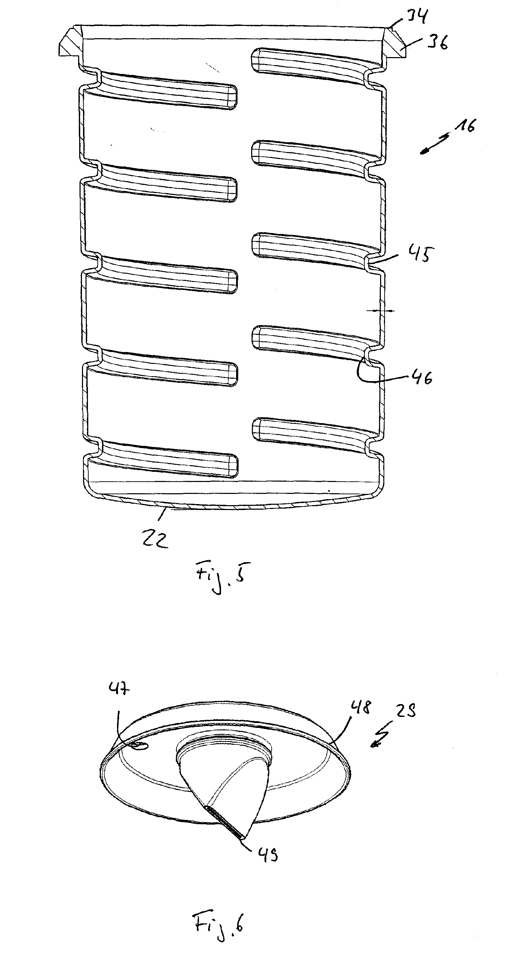

Die Figur 4 zeigt das becherförmige Gehäuse 11 in isometrischer Ansicht. Das becherförmige Gehäuse 11 weist zum Einführen des Filterelements 15 über den Umfang verteilte axial vom offenen Ende des becherförmigen Gehäuse 11 ausgehende Aussparungen 44 auf, welche in den Aussparungen 43 für die Rastkontur enden. So wird das Filterelement 15 mit den Teilen 36 der Rastelemente in die Aussparung 44 eingesetzt und bis zur Komplettierung der Rastkontur 42 bis zum Ende der Aussparung 43 der Rastkontur eingesetzt. Erst dadurch ergibt sich eine Vervollständigung der Rastkonturen 42 zur Verbindung mit dem Anschlusskopf 12.

Die Figur 5 zeigt einen Schnitt durch den Kanister 16 welcher die Aussenhülle des Filterelements 15 darstellt. Über die Mantelfläche des Kanisters 16 verteilt, sind mehrere Nuten 45, welche im Inneren des Kanisters 16 eine Anlagefläche 46 für den ersten Filterbalg 19 darstellen. Da die Nuten 45 nicht durchgehend im inneren Umfang des Kanisters 16 angeordnet sind, ergibt sich so eine einfache Möglichkeit die Flüssigkeit, welche gereinigt den ersten Filterbalg 19 durchströmt, über den Gehäuse bzw. Kanisterboden 22 dem reinseitigen Abflussraum 40 zuzuführen. In den Kanister 16 wird dann der Rest des oben beschriebenen Filterelementes eingeführt und an der Verbindungskontur 34 mit dem Kanister 16 verbunden. Dadurch entsteht ein flüssigkeitsdichtes System welches im Wartungsfall dafür sorgt, dass eine Verschmutzung der Umgebung und der Umwelt sowie schmutzige Filter des Wartenden vermieden werden können. Der axiale Abschluss des Kanisters 16 im Bereich des offenen Endes wird wiederum durch den Teil 36 der Rasteelemente gebildet, welcher in die Aussparung 43 der Rastkontur 42 des becherförmigen Gehäuses 11 eingreift.

Die Figur 6 zeigt die Rücklaufsperrmembran einer isometrischen Ansicht. Den vorherigen Figuren entsprechende Bauteile sind mit en gleichen Bezugszeichen versehen. Die Rücklaufsperrmembran ist im wesentlichen plattenförmig aufgebaut, bevorzugt aus einem thermoplastischen Elastomer hergestellt und weist im plattenförmigen Teil mehrere Öffnungen 47 zur Herstellung der Knüpfverbindung mit der Endscheibe 27 über die Anknüpfkontur 28 auf. Im äußeren Bereich weist die Rücklaufsperrmembran 29 eine zum plattenförmigen Bereich gewinkelte Dichtfläche 48 für den Einlassbereich des Filtersystems 10 auf, welcher durch die Flexibilität des Materials bei Einströmen der zu reinigenden Flüssigkeit sich von einer Dichtfläche in der Abschlussendscheibe 26 abhebt und dadurch ein Einströmen der Flüssigkeit gewährleistet. Bei stehender Brennkraftmaschine, das heißt wenn kein Flüssigkeitsdruck an der Rücklaufsperrmembran anliegt, verschließt die Dichtfläche 48 den Einlass 13 durch ihre Elastizität. Konzentrisch im Inneren der Rücklaufsperrmembran 29 ist eine Art Dichtventil 49 zur Abdichtung des Auslasses bei Herausnahme des Filterelementes aus dem Flüssigkeitskreislauf angeordnet. Die Auslassdichtung 49 weist eine Art Entenschnabel auf, welcher im eingesetzten Zustand durch das Auslassrohr 33 aus dem Anschlusskopf 12 heraus geöffnet wird, welche sich weiterhin bei Herausnahme des Auslassrohrs 33 durch die eigene Elastizität wieder schließt. Hier sind also Rücklaufsperrmembran und Rücklaufsperrventil einstückig in einem Bauteil realisiert.

Die Figur 7 zeigt eine Möglichkeit der Anwendung des Blockiermittels 38. Den vorherigen Figuren entsprechende Bauteile sind mit en gleichen Bezugszeichen versehen. In der Figur 7 ist eine Draufsicht eines Schnitts im Bereich des Blockiermittels 38 dargestellt. Das Blockiermittel 38 ist im Anschlusskopf 12 angeordnet, wobei im Anschlusskopf 12 ein Verriegelungsstift 50 sowie ein Federmittel 51 angeordnet ist derart, dass der Verriegelungsstift 50 axial gegen die Kraft des Federmittels 51 beweglich ist, und bei einem Zusammenführen von becherförmigem Gehäuse 11 und Anschlusskopf 12 bei nicht vorhandenem oder vorgesehenem Filterelement 15 durch die Kraft des Federmittels 51 in die Aussparung der Rastkontur 43 einrastet und so ein Verdrehen zur Herstellung der Bajonettverbindung verhindert. Bei korrekt eingesetztem Filterelement 15 sind die Aussparungen 43 und 44 durch den Teil 36 des Rastelementes des Filterelementes 15 ausgefüllt und komplettieren somit die Rastkontur 42 wodurch der Verriegelungsstift 50 gegen die Kraft des Federmittels 51 in den Anschlusskopf 12 hineingedrückt wird und somit ein Verdrehen von becherförmigem Gehäuse 11 gegenüber Anschlusskopf 12 möglich ist, wodurch die Bajonettverbindung hergestellt werden kann.

Figur 8 zeigt einen Schnitt durch eine alternative Rücklaufsperrmembran 29. Den vorherigen Figuren entsprechende Bauteile sind mit den gleichen Bezugszeichen versehen. Hier wird die Befestigung mit dem Filterelement in alternativer Weise über eine umlaufende, konzentrisch zur Einlassdichtfläche 48 angeordnete Ringnut 52 realisiert. Diese dient dann zur Aufnahme einer hier nicht dargestellten Endscheibe, wobei diese Anbindung in der folgenden Figur erläutert wird.

Figur 9 zeigt einen Schnitt durch einen Teil eines alternativen Filterelementes unter Einsatz der Rücklaufsperrmembran 29. Den vorherigen Figuren entsprechende Bauteile sind mit den gleichen Bezugszeichen versehen. Hierbei ist der innere Filterbalg 21 über ein Spiegelschweißverfahren mit der unteren Endscheibe 23 und der oberen Endscheibe 27 dichtend verbunden. Der Endscheibenabschluss 26 weist konzentrisch einen Befestigungsring 53 auf, über den die Rücklaufsperrmembran 29 mittels des Befestigungsringes 53 gehalten wird. Der Befestigungsring 53 ist bevorzugt einstückig mit dem Endscheibenabschluss 26 über Verbindungsstege 55 verbunden, wobei die Verbindungsstege 55 umlaufend um den Auslass 14 angeordnet sind. Endscheibenabschluss 26 und Endscheibe 23 weisen jeweils Dichtsitze 54 für den äußeren Filterbalg 19 auf und fixieren diesen zusätzlich. Der hier nicht dargestellte Kannister 16 kann analog zu den vorherigen Ausführungen ausgeführt sein und verbindet so die beiden Endscheiben 23 und 26.

## Patentansprüche

1. Filtersystem für ein Fluid, insbesondere Flüssigkeitsfilter, vorzugsweise Ölfilter für eine Brennkraftmaschine, aufweisend ein becherförmiges Gehäuse, ein wechselbar darin angeordnetes Filterelement und einen Aufnahmekopf, wobei das becherförmige Gehäuse lösbar mit dem Aufnahmekopf verbindbar ist, **dadurch gekennzeichnet, dass** das Filterelement eine flüssigkeitsdichte Ummantelung aufweist, welche im Inneren des becherförmigen Gehäuses angeordnet ist.

2. Filtersystem nach Anspruch 1, **dadurch gekennzeichnet, dass** die flüssigkeitsdichte Ummantelung im Wesentlichen die gleiche Außenkontor aufweist wie die Innenkontur des becherförmigen Gehäuses, derart, dass das becherförmige Gehäuse betriebsbedingte Durchmesserschwankungen der flüssigkeitsdichten Ummantelung aufnehmen und ihnen entgegenwirken kann.

3. Filterelement für ein Filtersystem nach einem der vorhergehenden Ansprüche, **dadurch gekennzeichnet, dass** das Filterelement wenigstens einen hohlzylindrischen Filterbalg aufweist, welcher einen Flüssigkeitseinlass dichtend von einem Flüssigkeitsauslass trennt, wobei die flüssigkeitsdichte Ummantelung Mittel zur Abstützung einer radialen Außenkontur des Filterbalges aufweist.

4. Filterelement nach Anspruch 3, **dadurch gekennzeichnet, dass** die flüssigkeitsdichte Ummantelung über den Umfang verteilte Stützkonturen aufweist, derart dass die Stützkonturen einerseits die Außenkontur des Filterbalges gegen radial nach Außen wirkende Kräfte, insbesondere gegen Druckpulsationen, stützen und andererseits die aufgenommenen Kräfte an das becherförmige Gehäuse weitergeben.

5. Filterelement nach Anspruch 4, **dadurch gekennzeichnet, dass** die Stützkonturen Abflussvolumina bilden, welche mit dem Boden der flüssigkeitsdichten Ummantelung korrespondieren, derart, dass durch den Filterbalg gereinigte Flüssigkeit durch die Abflussvolumina zum Boden der flüssigkeitsdichten Ummantelung fließen können.

6. Filterelement nach einem der Ansprüche 3 bis 5, **dadurch gekennzeichnet, dass** im Bereich einer der Stirnseiten wenigstens eine radial nach außen über den umfangsseitigen Durchmesser der flüssigkeitsdichten Ummantelung hinausgehende Wirkkontur angeordnet ist.

7. Filterelement nach Anspruch 6, **dadurch gekennzeichnet, dass** die Wirkkontur korrespondierend zu einer Aussparung des becherförmigen Gehäuses ausgelegt ist.

8. Filterelement nach einem der Ansprüche 3 bis 7, **dadurch gekennzeichnet, dass** im Bereich des Flüssigkeitseinlasses und -Auslasses eine einstückige Rücklaufsperrmembran angeordnet ist, wobei die Rücklaufsperrmembran bei ausgebauten Filterelement den Inhalt des Filterelementes gegenüber dem Ein- und Auslass dichtend abschließt.

9. Filterelement nach einem der Ansprüche 3 bis 8, **dadurch gekennzeichnet, dass** im Inneren der flüssigkeitsdichten Ummantelung zwei hohlzylindrische Filterbälge konzentrisch angeordnet sind, wobei die Filterbälge auf der einen Stirnseite eine gemeinsame Endscheibe aufweisen und auf der anderen Stirnseite jeweils eine eigene Endscheibe aufweisen.

10. Filterelement nach Anspruch 9, **dadurch gekennzeichnet, dass** die gemeinsame Endscheibe auf der den Filterbalgen gegenüberliegenden Seite, ein Federmittel zur Abstützung an der Innenseite des Bodens der flüssigkeitsdichten Ummantelung aufweist.

11. Filterelement nach einem der Ansprüche 9 bis 10, **dadurch gekennzeichnet, dass** die einzelne Endscheibe des äußeren Filterbalgs gleichzeitig einen dichten Abschluss der flüssigkeitsdichten Ummantelung bildet, wobei der radial äußere Rand der Endscheibe unlösbar dichtend mit der flüssigkeitsdichten Ummantelung verbunden ist.

12. Filterelement nach Anspruch 11, **dadurch gekennzeichnet, dass** die einzelne Endscheibe einen sich axial vom Filterelement weg erstreckenden Ringkragen aufweist, wobei im Ringkragen ein Dichtmittel zur Abdichtung des Filterelementes gegenüber dem Anschlusskopf angeordnet ist.
